# EUROPÄISCHE PATENTSCHRIFT

(11) **EP 2 198 131 B1**
(45) Veröffentlichungstag und Bekanntmachung des Hinweises auf die Patenterteilung: **30.11.2011**
(21) Anmeldenummer: 08803205.7
(22) Anmeldetag: 25.08.2008
(51) Int. Cl.: F01M 13/00, F01M 13/04

(54) **ÖLABSCHEIDEVORRICHTUNG, INSBESONDERE ZUR KURBELGEHÄUSEENTLÜFTUNG IN EINER BRENNKRAFTMASCHINE**
OIL SEPARATING DEVICE, PARTICULARLY FOR THE VENTILATION OF A CRANKCASE IN AN INTERNAL COMBUSTION ENGINE
DISPOSITIF SÉPARATEUR D'HUILE, NOTAMMENT POUR LA PURGE D'AIR DU CARTER DE VILEBREQUIN DANS UN MOTEUR À COMBUSTION INTERNE

(30) Priorität: 16.10.2007 DE 102007049725
(43) Veröffentlichungstag der Anmeldung: 23.06.2010
(73) Patentinhaber: Mann + Hummel GmbH, 71638 Ludwigsburg (DE)
(72) Erfinder: HAMMERSCHICK, Jörg, 71679 Asperg (DE)
(86) Internationale Anmeldenummer: PCT/EP2008/061090
(87) Internationale Veröffentlichungsnummer: WO 2009/049947

(56) Entgegenhaltungen:
- WO-A-2004/105955
- DE-A1- 10 339 249
- DE-A1- 19 918 311
- DE-U1-202006 004 897
- US-A- 5 660 607
- US-A1- 2003 221 398
- US-B1- 6 279 556

## Beschreibung

### Technisches Gebiet

Die Erfindung bezieht sich auf eine Ölabscheidevorrichtung, insbesondere zur Kurbelgehäuseentlüftung in einer Brennkraftmaschine, nach dem Oberbegriff des Anspruches 1.

### Stand der Technik

In der DE 37 01 587 C1 wird ein Ölabscheider beschrieben, der zur Kurbelgehäuseentlüftung in einem Verbrennungsmotor eingesetzt wird. Der Ölabscheider weist in einem Gehäuse ein ringförmiges Metallgestrick-Paket auf, das axial von dem in das Gehäuse eingeleiteten Öl-Luft-Gemisch durchströmt wird und in welchem sich größere Ölpartikel abscheiden können. Anschließend wird das vorgereinigte Öl-Luft-Gemisch in einen Zyklonabscheider im Gehäuseinneren eingeleitet, in welchem sich aufgrund der Radialströmung des Öl-Luft-Gemisches weitere Ölpartikel an der Wandung des Zyklons abscheiden können. Danach wird der gereinigte Luftstrom aus dem Gehäuse abgeleitet.

Das Metallgestrick-Paket kann nur zur Vorabscheidung größerer Ölpartikel eingesetzt werden, was zudem einen verhältnismäßig groben Aufbau des Gestrickes voraussetzt, da sich anderenfalls das Gestrick mit Öl zusetzen würde und eine Durchströmung unmöglich wäre. Der grobporige Aufbau des Gestrickes schränkt aber den Wirkungsgrad erheblich ein.
Die Schrift US5660607A offenbart eine Vorrichtung zum Abscheiden von Ölaerosol aus Luft, die modulartig aufgebaut ist mit einem Flanschteil, das als Adapterelement gestaltet ist, so dass die Möglichkeit besteht, eine Vielzahl von gleichen Abscheideelementen parallel anzuordnen. Es ist ein Umschaltventil offenbart, das den wechselweisen Betrieb zweier gleicher Ölabscheidermodule ermöglicht und ein Rückschlagventil, welches ein Rückströmen der entölten Luft verhindert.
In der US2003221398A wird eine Zyklonanordnung zum Abscheiden von Partikeln aus einem Fluidstrom mit mindestens zwei parallel angeordneten Zyklonen beschrieben, bei denen die Einlassöffnungen einzeln zu verschließen oder zu öffnen sind. Zur Anpassung an unterschiedliche Betriebsverhältnisse wird die Anzahl der wirkenden Zyklone zur Abscheidung von Partikeln aus einem Fluidstrom erhöht oder reduziert.
In der DE 103 39 249 wird eine Vorrichtung vorgeschlagen, die eine von einem Kurbelgehäuse zu einem Ansaugrohr einer Brennkraftmaschine verlaufende Entlüftungsleitung aufweist, wobei in der Entlüftungsleitung parallel geschaltete Abscheideelemente angeordnet sind. Die Menge des Gasstroms kann durch ein Schaltventil zu- oder abgeschaltet werden.

Auch aus der DE 196 42 219 A1 ist eine Ölabscheidevorrichtung mit zwei Abscheideeinheiten bekannt. In einem Gehäuse der Ölabscheidevorrichtung ist ein als Wendel mit mehreren Wendelgängen ausgebildeter Vorabscheider angeordnet, wobei größere Öltröpfchen an den Wendelgängen des Vorabscheiders abgesondert werden. Anschließend wird das vorgereinigte Öl-Luft-Gemisch in einen radial umgreifenden Ringraum im Gehäuse geleitet, welcher von einem Vlies ummantelt ist, das radial von dem vorgereinigten Gemisch durchströmt wird.

Auch wenn bei der DE 196 42 219 A1 das Vlies dem Labyrinth-Vorabscheider nachgeschaltet ist, besteht dennoch die Gefahr, dass sich das Vlies im Laufe der Zeit mit Öltröpfchen oder Ruß, welcher im Öl-Luft-Strom mitgeführt wird, zusetzt und sich der Wirkungsgrad verschlechtert. Daher muss das Vlies regelmäßig gewartet werden.

### Offenbarung der Erfindung

Der Erfindung liegt die Aufgabe zugrunde, mit einfachen Maßnahmen den Wirkungsgrad und/oder die Lebensdauer der Ölabscheidevorrichtung zu erhöhen.

Diese Aufgabe wird erfindungsgemäß mit den Merkmalen des Anspruches 1 gelöst. Die Unteransprüche geben zweckmäßige Weiterbildungen an.

Die erfindungsgemäße Ölabscheidevorrichtung wird vorzugsweise zur Kurbelgehäuseentlüftung in Brennkraftmaschinen eingesetzt. Die Ölabscheidevorrichtung umfasst ein erstes und ein zweites Abscheideelement, wobei die Abscheideelemente parallel zueinander angeordnet sind und in getrennten ersten bzw. zweiten Strömungswegen liegen. Der zu reinigende Öl-Luft-Strom wird wahlweise in den ersten, das erste Abscheideelement aufweisenden Strömungsweg, oder in den zweiten, das zweite Abscheideelement aufweisenden Strömungsweg eingeführt.

Damit ist es erstmals möglich, situationsabhängig eine Unterscheidung zwischen verschiedenen Abscheideelementen zu treffen, über die der zu reinigende Öl-Luft-Strom geführt werden soll. Dies hat den Vorteil, dass dasjenige Abscheideelement ausgewählt werden kann, welches am besten zur aktuellen Zusammensetzung des Öl-Luft-Gemisches passt. So kann es zweckmäßig sein, das Öl-Luft-Gemisch in Situationen mit einem hohen Ölanteil bzw. mit großen Öltröpfchen demjenigen Abscheideelement zuzuführen, das auf die Abscheidung eines größeren Ölanteils bzw. größerer Öltröpfchen am besten angepasst ist. In Fahrsituationen mit feiner verteilten Öltröpfchen bzw. einem kleineren Ölanteil ist es dagegen zweckmäßig, dasjenige Abscheideelement auszuwählen, das besser an dieses Verhältnis von Öl und Luft angepasst ist.

Zweckmäßigerweise besitzen die Abscheideelemente verschiedene Filterwirkungen, hervorgerufen durch einen unterschiedlichen Aufbau. Grundsätzlich ist es aber auch möglich, gleiche oder gleichartige Abscheideelemente vorzusehen, wobei der Wechsel vom ersten zum zweiten Abscheideelement durchgeführt wird, sobald die Filtrationswirkung des ersten Abscheideelementes nachlässt und unter einen Grenzwert abfällt.

Gemäß einer bevorzugten Weiterbildung ist das erste Abscheideelement als Filterelement ausgeführt, insbesondere als Filtervlies, und das zweite Abscheideelement als Zyklon-, Labyrinth- oder Prallabscheider. Das Filterelement eignet sich insbesondere zur Abscheidung von feineren Öltröpfchen, wohingegen der Zyklon-, Labyrinth- oder Prallabscheider besser zur Abscheidung von größeren Öltröpfchen geeignet ist. Grundsätzlich zeichnen sich aber beide Abscheideelemente durch einen einfachen konstruktiven Aufbau auf.

Ein weiterer Vorteil der separaten Ausführung der Abscheideelemente in getrennten Strömungswegen liegt in der einfachen Wartungsmöglichkeit. Für Wartungszwecke muss nur das betreffende Abscheideelement in einem der Strömungswege ausgetauscht bzw. gereinigt werden, wohingegen das zweite Abscheideelement in seiner Position im Strömungsweg verbleiben kann.

Ein weiterer Vorteil liegt in dem einfachen Aufbau von Filterelement und dem Zyklon- oder Labyrinth- bzw. Prallabscheider. Das Filterelement, insbesondere in seiner Ausführung als Filtervlies, ist einfach und kostengünstig herstellbar und kann nach dem Zusetzen mit Öltröpfchen ausgetauscht und durch ein neues Filterelement ersetzt werden. Der Labyrinth-, Zyklon- bzw. Prallabscheider basiert auf einer einfachen mechanischen Abscheidewirkung, bei der die Öltröpfchen entweder durch eine Rotation des Öl-Luft-Gemisches nach außen getragen werden und an einer Innenwand sich abscheiden oder axial oder radial gegen eine Prallplatte treffen. Aufwändige Tellerseparatoren oder elektrostatische Separatoren sind grundsätzlich zwar auch möglich, jedoch nicht zwingend erforderlich.

Gemäß einer weiteren bevorzugten Ausführung verzweigen der erste und der zweite Strömungsweg von einer gemeinsamen Zuleitung, wobei in der Verzweigung ein Ventil angeordnet ist, über das die Einströmung des Öl-Luft-Massenstromes in den ersten bzw. den zweiten Strömungsweg einzustellen ist. Dieses Ventil, bei dem es sich beispielhaft um ein Magnetventil handelt, regelt die Zufuhr in jeden Strömungsweg, wobei vorzugsweise sowohl eine Einstellung in Betracht kommt, bei der der gesamte Öl-Luft-Massenstrom in den ersten Strömungsweg eingeleitet wird, als auch eine Einstellung, in der der gesamte Öl-Luft-Massenstrom in den zweiten Strömungsweg geführt wird. Vorteilhafterweise sind auch Zwischenpositionen möglich, in denen ein Teilmassenstrom sowohl in den ersten als auch in den zweiten Strömungsweg zu den betreffenden Abscheideelementen eingeleitet wird, wobei das Verhältnis der Teilmassenströme über das Ventil einstellbar ist.

Die Einstellung des Ventils erfolgt vorzugsweise über Stellsignale einer Regel- bzw. Steuereinheit und wird in Abhängigkeit einer aktuellen Zustands- oder Betriebsgröße durchgeführt. Bei dieser Zustands- bzw. Betriebsgröße handelt es sich insbesondere um eine Kenngröße der Brennkraftmaschine bzw. eines Aggregats der Brennkraftmaschine, vorzugsweise um den aktuellen Lastzustand der Brennkraftmaschine. Unterhalb eines Kenngrößengrenzwertes wird der Öl-Luft-Strom dem ersten Abscheideelement und oberhalb des Grenzwertes dem zweiten Abscheideelement zugeführt. Wie oben erwähnt, ist es auch möglich, je nach dem aktuellen Wert der Kenngröße Teilmassenströme sowohl dem ersten als auch dem zweiten Abscheideelement zuzuführen.

Stromab des ersten und des zweiten Abscheideelements münden die Strömungswege vorzugsweise wieder in einen gemeinsamen Strömungskanal, der bei einem Einsatz in Brennkraftmaschinen bevorzugt in den Ansaugtrakt mündet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Übersichtsdarstellung einer Ölabscheidevorrichtung, die zur Kurbelgehäuseentlüftung in einer Brennkraftmaschine eingesetzt wird,
- Fig. 2: eine Darstellung der erfindungsgemäßen Ölabscheidevorrichtung, mit einem Filterelement in einem ersten Strömungsweg und einem Labyrinthabscheider in einem parallel liegenden, zweiten Strömungsweg.

In den Figuren sind gleiche Bauteile mit gleichen Bezugszeichen versehen.

### Ausführungsformen der Erfindung

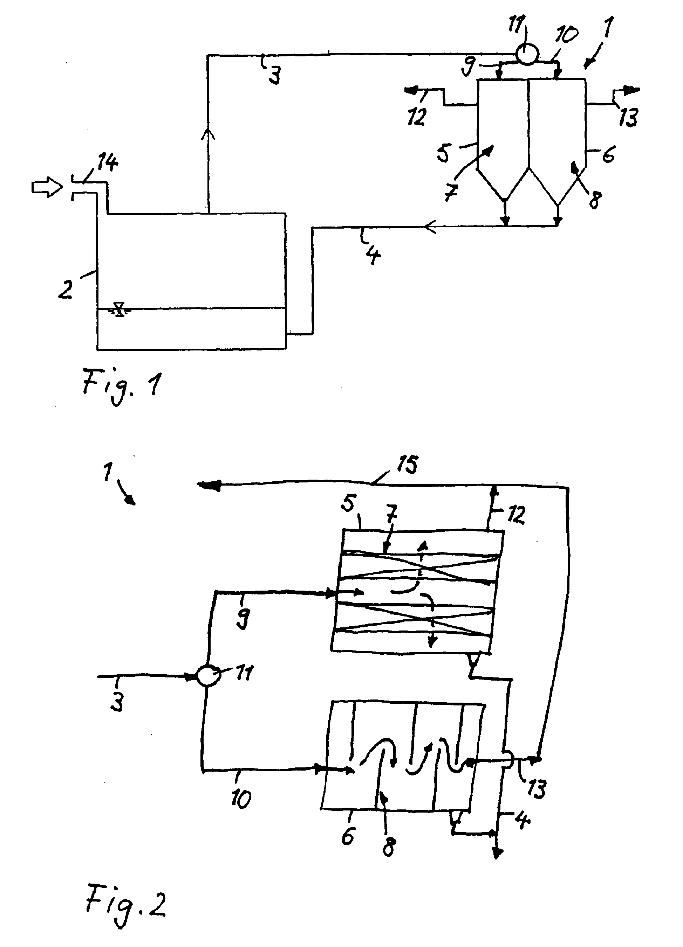

In Fig. 1 ist eine Ölabscheidevorrichtung 1 zur Kurbelgehäuseentlüftung in einer Brennkraftmaschine dargestellt. Die Blow-by-Gase werden über einen Einströmstutzen 14 in das Kurbelgehäuse 2 der Brennkraftmaschine eingeleitet und über die Zuführleitung 3 als Öl-Luft-Gemisch zur Abscheidung der Ölanteile der Ölabscheidevorrichtung 1 zugeführt. Die Ölabscheidevorrichtung 1 umfasst zwei separat ausgebildete und parallel zueinander angeordnete Abscheider 5 und 6 mit jeweils einem Abscheideelement 7 bzw. 8. Die Abscheider 5 und 6 liegen jeweils in separaten Strömungswegen 9, 10, die über ein Ventil 11 mit der Zuführleitung 3 verbunden sind. Je nach Einstellung des Ventils 11 werden die Blow-by-Gase aus der Zuführleitung 3 entweder in den ersten Strömungsweg 9 zum Abscheider 5 oder in den zweiten Strömungsweg 10 zum zweiten Abscheider 6 geleitet oder anteilig auf beide Abscheider verteilt.

In den Abscheidern 5 und 6 werden die Ölpartikel aus dem Öl-Luft-Strom separiert, gesammelt und über Austragstutzen und eine Rücklaufleitung 4 wieder in das Kurbelgehäuse 2 zurückgeführt. Der gereinigte Luftstrom wird über Strömungsleitungen 12 und 13 aus den Abscheidern 5 bzw. 6 abgeführt und beispielsweise in den Ansaugtrakt der Brennkraftmaschine eingeleitet.

In Fig. 2 ist die Ölabscheidevorrichtung 1 in vergrößerter Darstellung gezeigt. Die in den Strömungswegen 9 und 10 liegenden Abscheider 5 und 6 sind unterschiedlich aufgebaut und insbesondere zur Filtration von unterschiedlichen Anteilen von Öltröpfchen und Luft in den Blow-by-Gasen ausgebildet. Dies erlaubt über eine entsprechende Stellung des Ventils 11 eine situationsangepasste Filtration der Blow-by-Gase, wodurch zum einen deren Abscheidegrad verbessert und zum andern die Lebensdauer der Abscheideelemente 7 bzw. 8 in den Abscheidern 5 bzw. 6 erhöht wird.

Im Ausführungsbeispiel ist das Abscheideelement 7 im ersten Abscheider 5 als Filterelement, insbesondere als Filtervlies ausgeführt, das von den in den Abscheider 5 eingeführten Blow-by-Gasen radial von innen nach außen durchströmt wird, wobei im Rahmen der Erfindung grundsätzlich auch eine radiale Durchströmung in Gegenrichtung oder eine axiale Durchströmung in Betracht kommt. Das Filterelement 7 ermöglicht eine Feinfiltration und damit eine Abscheidung von sehr kleinen Ölpartikeln aus dem Öl-Luft-Gemisch. Die abgeschiedenen Ölpartikel werden im Abscheider 5 gesammelt und über einen Ölaustragstutzen ausgeleitet und über die Rücklaufleitung 4 zurück in das Kurbelgehäuse geführt. Die gereinigten Gase werden über die Strömungsleitung 12 aus dem Abscheider 5 abgeleitet und in einen Strömungskanal 15 geführt, der in den Ansaugtrakt der Brennkraftmaschine mündet.

Der zweite Abscheider 6 ist als einfach aufgebauter, mechanisch wirkender Labyrinthabscheider ausgebildet, dessen Abscheideelement 8 als Labyrinthweg mit einzelnen, in den Strömungsweg einragenden Prallplatten ausgebildet ist, an denen die Öltröpfchen der Blow-by-Gase abgeschieden werden. Der Labyrinthabscheider eignet sich insbesondere zur Abscheidung von höher belasteten Blow-by-Gasen mit einem größeren Ölanteil im Öl-Luft-Gemisch. Die abgeschiedenen Ölpartikel werden über einen Ölaustragstutzen aus dem Gehäuse des Abscheiders 6 ausgeleitet und in die Rücklaufleitung 4 geführt. Die gereinigten Gase werden über die Strömungsleitung 13 in den Strömungskanal 15 geführt.

Das Ventil 11 ist einstellbar ausgeführt, beispielsweise als Magnetventil, und kann über Stellsignale einer Regel- bzw. Steuereinheit in Abhängigkeit diverser Zustands- bzw. Betriebs- oder Kenngrößen eingestellt werden. Beispielsweise kommt eine Einstellung in Abhängigkeit des aktuellen Lastzustands der Brennkraftmaschine in Betracht. Weitere Einflussgrößen sind die Fahrzeuggeschwindigkeit oder die Motor- bzw. Öltemperatur.

## Patentansprüche

1. Ölabscheidevorrichtung, insbesondere zur Kurbelgehäuseentlüftung in einer Brennkraftmaschine, mit einem ersten Abscheideelement (7) und einem zweiten Abscheideelement (8), wobei die Abscheideelemente (7, 8) parallel angeordnet sind und in einem getrennten ersten bzw. zweiten Strömungsweg (9, 10) liegen, wobei der zu reinigende Öl-Luft-Strom wahlweise in den ersten, das erste Abscheideelement (7) aufweisenden Strömungsweg (9) oder in den zweiten, das zweite Abscheideelement (8) aufweisenden Strömungsweg (10) einzuführen ist, **dadurch gekennzeichnet, dass** das erste Abscheideelement (7) und das zweite Abscheideelement (8) unterschiedliche Filterwirkungen besitzen, hervorgerufen durch einen unterschiedlichen Aufbau, wobei der erste und der zweite Strömungsweg (9, 10) von einer gemeinsamen Zuleitung (3) abzweigen **dadurch gekennzeichnet, daß** das in der Verzweigung zwischen der Zuleitung (3) und dem ersten bzw. dem zweiten Strömungsweg (9, 10) ein einstellbares Ventil (11) angeordnet ist, wobei das Ventil (11) in Abhängigkeit einer aktuellen Zustands- oder Betriebsgröße der Brennkraftmaschine bzw. eines Aggregats der Brennkraftmaschine einstellbar ist.

2. Ölabscheidevorrichtung nach Anspruch 1, **dadurch gekennzeichnet, dass** das erste Abscheideelement (7) ein Filterelement ist, insbesondere ein Filtervlies.

3. Ölabscheidevorrichtung nach einem der Ansprüche 1 oder 2, **dadurch gekennzeichnet, dass** das zweite Abscheideelement (8) ein Zyklon- oder Labyrinthabscheider ist.

4. Ölabscheidevorrichtung nach einem der vorherigen Ansprüche, **dadurch gekennzeichnet, dass** das Ventil (11) in Abhängigkeit des aktuellen Lastzustands der Brennkraftmaschine einzustellen ist.

5. Ölabscheidevorrichtung nach Anspruch 4, **dadurch gekennzeichnet, dass** bei geringer Last der Öl-Luft-Strom in den ersten Strömungsweg (9) und bei höherer Last der Öl-Luft-Strom in den zweiten Strömungsweg (10) eingeleitet wird.

6. Ölabscheidevorrichtung nach einem der Ansprüche 1 bis 5, **dadurch gekennzeichnet, dass** das Ventil (11) in der Weise einstellbar ist, dass entweder nur der erste Strömungsweg (9) oder nur der zweite Strömungsweg (10) geöffnet ist oder dass ein Teilmassenstrom sowohl in den ersten als auch den zweiten Strömungsweg (9, 10) einzuführen ist.

7. Ölabscheidevorrichtung nach einem der Ansprüche 1 bis 6, **dadurch gekennzeichnet, dass** das Ventil (11) als Magnetventil ausgebildet ist.

8. Ölabscheidevorrichtung nach einem der Ansprüche 1 bis 7, **dadurch gekennzeichnet, dass** die beiden Strömungswege (9, 10) stromab des ersten und zweiten Abscheideelementes (7, 8) in einen gemeinsamen Strömungskanal (15) münden.

## Claims

1. Oil-separating device, in particular for crankcase ventilation in an internal combustion engine, with a first separating element (7) and a second separating element (8), the separating elements (7, 8) being disposed parallel and laying in a separated first and second flow path (9, 10), the oil-air flow to be cleaned is to be introduced alternately into the first flow path (9) featuring the first separating element (7) or into the second flow path (10) featuring the second separating element (8), **characterized in that** the first separating element (7) and the second separating element (8) have different filtering effects, due to a different structure, the first and the second flow path (9, 10) bifurcing from a common supply line (3), **characterized in that** in the bifurcation between the supply line (3) and the first and the second flow path (9, 10), an adjustable valve (11) is disposed, the valve (11) being adjustable depending on the current state or operation variable of the internal combustion engine and a unit of the internal combustion engine.

2. Oil-separating device according to claim 1, **characterized in that** the first separating element (7) is a filter element, in particular a filter fleece.

3. Oil-separating device according to one of the claims 1 or 2, **characterized in that** the second separating element (8) is a cyclone or labyrinth separator.

4. Oil-separating device according to one of the above claims, **characterized in that** the valve (11) is to be adjusted depending on the current load status of the internal combustion engine.

5. Oil-separating device according to claim 4, **characterized in that** in case of lower load the oil-air flow is directed into the first flow path (9) and in case of higher load the oil-air flow is directed into the second flow path (10).

6. Oil-separating device according to one of the claims 1 to 5, **characterized in that** the valve (11) can be adjusted such that either only the first flow path (9) or only the second flow path (10) is opened or that a partial mass flow is to be directed into the first and the second flow path (9, 10).

7. Oil-separating device according to one of the claims 1 or 6, **characterized in that** the valve (11) is designed as solenoid valve.

8. Oil-separating device according to one of the claims 1 to 7, **characterized in that** both flow paths (9, 10) lead downstream of the first and the second separating element (7, 8) into a common flow channel (15).

## Revendications

1. Dispositif de séparation d'huile, notamment pour la ventilation du carter de vilebrequin dans un moteur à combustion interne, avec un premier élément séparateur (7) et un deuxième élément séparateur (8), les éléments séparateurs (7, 8) étant parallèles et situés dans une première et une deuxième voies d'écoulement (9, 10) séparées, le flux d'huile/d'air à purifier devant être introduit, au choix, dans la première voie d'écoulement (9) comportant le premier élément séparateur (7) ou dans la deuxième voie d'écoulement (10) comportant le deuxième élément séparateur (8), **caractérisé en ce que** le premier élément séparateur (7) et le deuxième élément séparateur (8) ont différents effets de filtration résultant de structures différentes, la première et la deuxième voies d'écoulement (9, 10) étant dérivées d'une conduite d'alimentation (3) commune, **caractérisé en ce qu'**une soupape (11) réglable est placée dans la dérivation entre la conduite d'alimentation (3) et la première et la deuxième voies d'écoulement (9, 10), la soupape (11) pouvant être réglée en fonction d'un paramètre d'état ou de service actuel du moteur à combustion interne ou d'un groupe du moteur à combustion interne.

2. Dispositif de séparation d'huile selon la revendication 1, **caractérisé en ce que** le premier élément séparateur (7) est un élément filtrant, notamment un filtre en non-tissé.

3. Dispositif de séparation d'huile selon l'une des revendications 1 ou 2, **caractérisé en ce que** le deuxième élément séparateur (8) est un séparateur à cyclone ou un séparateur à labyrinthe.

4. Dispositif de séparation d'huile selon l'une des revendications précédentes, **caractérisé en ce que** la soupape (11) doit être réglée en fonction de la charge actuelle du moteur à combustion interne.

5. Dispositif de séparation d'huile selon la revendication 4, **caractérisé en ce que**, à faible charge, le flux d'huile/d'air est introduit dans la première voie d'écoulement (9) et, à forte charge, le flux d'huile/d'air est introduit dans la deuxième voie d'écoulement (10).

6. Dispositif de séparation d'huile selon l'une des revendications 1 à 5, **caractérisé en ce que** la soupape (11) peut être réglée de manière à ce que soit uniquement la première voie d'écoulement (9) soit uniquement la deuxième voie d'écoulement (10) est ouverte, ou bien qu'un flux massique peut être introduit aussi bien dans la première que dans la deuxième voies d'écoulement (9, 10).

7. Dispositif de séparation d'huile selon l'une des revendications 1 à 6, **caractérisé en ce que** la soupape (11) est conçue comme une électrovanne.

8. Dispositif de séparation d'huile selon l'une des revendications 1 à 7, **caractérisé en ce que** les deux voies d'écoulement (9, 10) aboutissent en aval du premier et du deuxième éléments séparateurs (7, 8) dans un conduit d'écoulement (15) commun.
